(19) Europäisches Patentamt
European Patent Office
Office européen des brevets

(11) Publication number: **0 130 304**
**B1**

(12) **EUROPEAN PATENT SPECIFICATION**

(45) Date of publication of patent specification: **24.09.86**

(51) Int. Cl.$^4$: **F 16 B 39/12**

(21) Application number: **84104708.7**

(22) Date of filing: **26.04.84**

(54) **Double locknut assembly and combination of locknut assembly with a bolt.**

(30) Priority: **27.06.83 JP 115472/83**

(43) Date of publication of application:
**09.01.85 Bulletin 85/02**

(45) Publication of the grant of the patent:
**24.09.86 Bulletin 86/39**

(84) Designated Contracting States:
**DE FR GB IT SE**

(56) References cited:
**DE-A-3 032 167**
**DE-C- 402 574**
**DE-C- 459 064**
**JP-B-48 025 700**

(73) Proprietor: **Komatsu, Minoru**
**1-539, Ikebukuro Toshima-ku**
**Tokyo-To (JP)**

(72) Inventor: **Komatsu, Minoru**
**1-539, Ikebukuro Toshima-ku**
**Tokyo-To (JP)**

(74) Representative: **Lehn, Werner, Dipl.-Ing. et al**
**Hoffmann, Eitle & Partner Patentanwälte**
**Arabellastrasse 4 (Sternhaus)**
**D-8000 München 81 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 130 304 B1

## Description

This invention relates to a double locknut assembly.

In general, a bolt-nut assembly is widely used for fastening mechanical members. However, there have often been cases in which a nut of the assembly is easily loosened and unscrewed when external forces such as vibration or shock are exerted on the bolt-nut assembly.

To avoid this, various kinds of double locknut assemblies have been used. In a conventional double locknut assembly, when one nut is tightened against the surface of a mechanical member through which a bolt is inserted, the nut provides an axial tightening force against the mechanical member. However, as soon as the nut begins to become slightly loose due to vibration or impact force exerted on the assembly, the assembly immediately loses its function as a double nut assembly, with the result that it becomes loose like a single nut.

In addition, when the conventional double locknut assembly is fastened against the mechanical member, a tightening tool such as a spanner or a wrench is used to tightly fasten it. This sometimes results in damage to the threads of the two nuts of the assembly and the bolt, whereby the nuts easily become loose.

Accordingly, even if the friction force between the end surface of one of the two nuts and the surface of the mechanical member to be fastened by the nuts is remarkably increased, the nuts cannot be completely prevented from becoming loose.

As a result of his study of double nut assemblies, the present inventor has found that the friction force between the end faces, opposite to and contacting each other, of the two nuts of the assembly, rather than that between the end face of one of the two nuts and the surface of the mechanical member, should be increased in order to prevent loosening of the assembly. On the basis of this discovery, he previously invented a double nut assembly which was disclosed in JP—B—48—25700. This double nut assembly has a recessed female nut in the shape of a cup and a convex male nut which is provided with a flange and a cylindrical screw portion projecting from the flange. The cylindrical screw portion of the male nut is inserted into the female nut. At the center portion of each nut is usually provided a tapped hole, the inner peripheral surface of which is formed with female screw threads to engage with the male screw threads of a bolt. The outer peripheral surface of the cylindrical screw portion of the male nut is provided with left-hand male screw threads to enage with left-hand female screw threads on the inner peripheral surface of the female nut.

When the double nut assembly is fastened against a mechanical member, first, the two nuts are combined with each other in a manner that the cylindrical portion of the male nut is screwed into the female nut while being rotated in the left-hand direction. Thereafter, the combined nuts are engaged with the projected portion of the bolt projecting from the surface of the mechanical member while being rotated in the right-hand direction. With the end face of the combined nuts abutting against the surface of the mechanical member, that one of the two nuts which is remote from the mechanical member is rotated in the left-hand direction to generate a great friction force between the engaging surfaces of the two nuts. At this time, the two nuts are pulled toward each other to bite against the bolt.

As mentioned above, this double nut assembly is adapted to bite against the bolt in such a manner that the male and female nuts are tightened against or pulled toward each other so as to form an integral unit with either one of the male and female nuts abutting against the mechanical member. Accordingly, in this assembly, it is not necessary to increase excessively the friction force between the end face of one of the two nuts and the surface of the mechanical member to prevent the assembly from becoming loose. This double nut assembly is highly effective and almost completely reliable for fastening most mechanical members under ordinary conditions. However, under certain conditions of severe vibration and/or impact force imparted to the fastening for a long period of time, a much more positive double nut assembly of even greater reliability becomes necessary. As a result of study of this problem, including experiments as will be described hereinafter, the inventor has come to the conclusion that, in order to obtain such a highly reliable double nut assembly, the friction force between the two nuts must be increased.

It is an object of this invention to provide a double nut assembly which has a positive and highly reliable locking function to prevent loosening after tightening relative to a bolt and can be easily fastened thereagainst and released therefrom.

According to this invention, there is provided a double locknut assembly comprising a first nut having a flange and a cylindrical portion projecting coaxially from the flange and a second nut in the form of a cup for receiving the cylindrical portion therein, the first nut having: a tapped hole tapped with a plurality of first female screw threads to engage with a bolt; and a plurality of second male screw threads formed on the outer peripheral surface of the cylindrical portion, the second male screw threads being of a hand opposite to that of the first female screw threads, the second nut having: a base portion provided with a tapped hole tapped with a plurality of third female threads to engage with the bolt; and a cylindrical side wall portion projecting from the base portion, the inner wall surface of the wall portion being formed with a plurality of fourth female screw threads to engage with the second male screw threads, the double nut assembly being engagable with the bolt with the first and second nuts combined with each other until one face of the assembly abuts against the surface of a mechanical member or members to be fastened, either one of the first and second nuts which does not contact the surface of the mechanical member or members being thereafter rotated in the direction opposite to that of the screw threads of the bolt and the first and third female screw threads thereby to fasten the assembly against the mechanical member or members, the end face of the side wall portion of the second nut and the end face, of the flange of the first nut, opposite to the end face of the side wall portion being respectively formed with two helically inclined surfaces to mutually confront and correspondingly mate with each other which surfaces are respectively inclined along the inclined direction of the third female screw threads, and the first female screw threads.

The nature, utility, and advantages of this invention will be more clearly apparent from the following detailed description with respect to preferred embodiments of the invention when read in conjunction with the accompanying drawings, in which:

FIG. 1 is a side view, partially broken down, showing the state wherein a double nut assembly of this invention is engaged with a bolt;

FIG. 2 is a plan view of a first nut of the double nut assembly;

FIG. 3 is a side view of the first nut;

FIG. 4 is a side view in longitudinal section of the first nut;

FIG. 5 is a plan view of a second nut of the double nut assembly;

FIG. 6 is a side view of the second nut;

FIG. 7 is a side view in longitudinal section showing the second nut;

FIG. 8 is an enlarged side view, in longitudinal section, of the double nut assembly for explaining tightening forces generated therein when the nut is tightened relative to a bolt;

FIG. 9(A) is an explanatory diagram indicating the relationship between tightening forces $P_1$ and $P_2$ shown in FIG. 8;

FIG. 9(B) is an explanatory diagram indicating the relationship between tightening forces $P_3$ and $P_4$ shown in FIG. 8;

FIG. 10 is a side view, with parts cut away, of the double nut assembly, showing another mode of its engagement with a bolt;

FIG. 11 is a perspective view of another first nut;

FIG. 12 is a graph indicating a comparison, in performance efficiency, between two conventional nuts and the double nut assembly of this invention;

FIG. 13 is a perspective view showing the head of a testing machine;

FIG. 14 is a perspective view showing a test member used in the testing machine shown in FIG. 13;

FIG. 15 is a perspective view of a conventional nut used in the test;

FIG. 16(A) is a perspective view of a conventional double nut assembly used in the test in a state wherein two nuts are combined;

FIG. 16 (B) is an exploded perspective view of the conventional double nut assembly shown in FIG. 16(A) in a state wherein the two nuts are separated from each other;

FIG. 17 is a graph showing another comparison, in performance efficiency, between the conventional nut shown in FIG. 15 and the double nut assembly of this invention; and

FIG. 18 is a side elevation, partially broken away, of another testing machine, the results of the tests carried out by this testing machine being shown in FIG. 17.

In FIG. 1, two mechanical members 1a and 1b are fastened by a combination of a bolt 2 and a double nut assembly 3 of this invention. The bolt 2 has a bolt head 2a and a shank 2b which extends through a drilled hole h formed through the two mechanical members. With the projecting portion of the shank 2b is engaged the double nut assembly 3 which comprises a first nut 4 and a second nut 5.

The first nut 4 has a flange 4a of hexagonal shape in plan view and a cylindrical portion 4b projecting upward from the flange 4a as shown in FIGS. 1 through 4. At the center portion of the first nut 4 is provided a tapped hole 4c, the inner peripheral surface of which is formed with a plurality of female right-handed screw threads A to engage with a plurality of male screw threads B formed on the outer peripheral surface of the bolt shank 2b. On the outer peripheral surface of the cylindrical portion 4b is provided a plurality of male left-hand screw threads C, the pitch of which is narrower than that of the female right-hand screw threads A. Furthermore, the flange 4a has, on the side facing the second nut 5, a helically inclined surface K extending along a right-hand screw thread with a certain inclination angle. The helically inclined surface K starts at one corner 4c of the hexagonal flange 4a and extends around and along the root portion of the cylindrical portion 4b to terminate at the same corner 4c with a step 4d formed thereat.

The second nut 5 has a concave shape like an inverted hexagonal cup. Through the base portion of the second nut 5 is provided a tapped hole 5b, the wall of which is formed with a plurality of female right-handed screw threads D to engage with the screw threads B of the bolt 2 as shown in FIGS. 1, 5, 6 and 7. A tapped hole 5c surrounded by the side wall 5d is also provided. The tapped hole 5c has a larger diameter than that of the tapped hole 5b, and on its inner peripheral surface is provided a plurality of female left-handed screw threads E to engage with the male left-handed screw threads C.

As mentioned above, the pitch of the screw threads C is narrower than that of the threads A which is equal to the pitch of the threads D. Accordingly, the pitch of the threads E is narrower than that of the threads D to engage with the threads B of the bolt 2. The end face of the second nut 5 forms a helically inclined surface L corresponding to the helically inclined surface K of the first nut 4. Therefore, the surface L also extends along a right-handed screw thread with the same inclination angle as that of the surface L of the first nut 4 thereby to form a step 5e at a corner of the hexagonal end face, corresponding to the corner having the step 4d of the flange of the first nut 4.

When the double nut assembly 3 of this invention is used, first, the cylindrical portion 4b of the first nut 4 is screwed into the tapped hole 5c of the second nut 5 while being rotated in the left-handed direction to form an integrated unit. Successively, the integral unit is screwed onto the projected shank 2b while being rotated in the right-handed direction until the flange 4a of the first nut 4 abuts, at its end face M, against the surface of the mechanical member 1b. In this case, when the first nut 4 is screwed into the second nut 5 by hand until the two inclined screw-surfaces K and L are brought into light abutment against each other with the hexagonal shapes of the two nuts registered with each other, the threads D of the second nut 5 and the threads A of the first nut 4 are so designed as to engage smoothly with the threads B of the bolt 2 at the same time. Accordingly, in this state of the engagement of the two nuts 4 and 5, the integral unit can be easily screwed onto the projected shank 2b.

After the end face M of the flange 4a thereof has been brought into abutment against the surface of the mechanical member 1b, the first nut 4 is further rotated by means of a spanner or like tool in the right-handed direction to fasten tightly the two mechanical members 1a and 1b. At the same time or thereafter, the second nut 5 is rotated with a spanner or the like in the left-handed direction to generate a great friction force between the two helically inclined surfaces K and L.

The state of the integral unit at this time will now be described with reference to FIGS. 8 and 9.

When the second nut 5 is rotated in the left-handed direction to tighten it against the first nut 4, the lower inclined surfaces $d_1$ of each thread D of the second nut 5 is pressed against the upper inclined surface $b_1$ of each thread B of the bolt 2 to generate a downward tightening force $P_1$ while the upper inclined surface $a_1$ of each thread A of the first nut 4 is pressed against the lower inclined surface $b_2$ of each thread B of the bolt 2 to generate an upward tightening force $P_2$ because the first nut 4 is pressed against the surface of the mechanical member 1b thereby to receive a repulsive force therefrom. Accordingly, on the threads B of the bolt 2 are exerted the two tightening forces $P_1$ and $P_2$ (hereinafter called a first fastening function) whose directions are opposed to each other in the axial direction of the bolt 2 so that the two nuts 4 and 5 are pulled toward each other on the bolt 2.

Furthermore, as the direction of the screw threads D of the second nut 5 and the screw thread B of the bolt corresponding to each other are opposite to that of the screw thread E of the second nut 5 and the screw thread C of the first nut 4 corresponding to each other, the upper inclined surface $e_1$ of each thread E of the second nut 5 is pressed against the lower inclined surface $c_1$ of each thread C of the first nut 4 to generate an upward tightening force $P_3$ when the second nut 5 is rotated in the left handed direction. That is, as the inclination direction of each of the threads B and D are opposite to that of each of threads C and E, if the second nut 5 is rotated in the left-handed direction so as to descend as viewed in FIG. 8, the lower surface $d_1$ of each thread D slides forcibly on the upper surface $b_1$ against the inclination of the surface $b_1$ of each thread B in the left-handed direction thereby to bind or bite thereagainst. At the same time, the upper surface $e_1$ of each thread E bites against the lower surface $c_1$ of each thread C while sliding on the surface $c_1$ along the inclination thereof.

FIG. 9(A) shows diagrammatically this state. That is, a female wedge-shaped abutment surface comprising the two surfaces $d_1$ and $e_1$ whose inclination directions are opposite to each other forcibly bites or binds against a male wedge-shaped abutment surface comprising the two surfaces $b_1$ and $c_1$ whose inclination directions are opposite to each other thereby to generate two tightening forces $P_1$ and $P_3$ facing each other (hereinafter called a second fastening function).

Moreover, when the second nut 5 is rotated in the left-handed direction, the helically inclined surface L formed at the end face of the second nut 5 slides forcibly on and bites against the upward slope of the helically inclined surface K to generate a downward tightening force $P_4$ while the upper surface $e_1$ of each thread E bites against the downward slope of the lower surface $c_1$ of each thread C to generate the upward tightening force $P_1$. That is, as shown in FIG. 9(B), a male wedge-shaped abutment surface comprising the two surfaces $e_1$ and L whose inclination directions are opposite to each other forcibly bites against a female wedge-shaped abutment surface comprising the two surfaces $c_1$ and K whose inclination directions are opposite to each other thereby to generate two tightening forces $P_3$ and $P_4$ repulsive against each other (hereinafter called a third fastening function).

Thus, when the second nut 5 is rotated in the left-handed direction to increase the frictional force between the two surfaces K and L, the three fastening functions (three combinations of frictional forces; $P_1$ and $P_2$, $P_1$ and $P_3$, and $P_3$ and $P_4$) cooperate with each other to fasten the double nut assembly 3 against the bolt 2. Accordingly, the double nut assembly 3 cannot become loose even when violent vibrations and great impact forces are exerted on the double nut assembly 3.

If the second nut 5 is rotated by a spanner or the like so as to register the two hexagonal figures of the two nuts 4 and 5 with each other in the right-handed direction, the assembly can be easily made ready for unfastening. Thereafter, the two nuts 4 and 5 are rotated together in the left-handed direction to unscrew them.

As the threads C and E have a narrower pitch than the threads A, B and D, when the second nut 5 is rotated in the left-handed direction, the second nut 5 is moved slowly toward the flange 4a of the first nut 4 to permit the second nut 5 to rotate through a large angle about the first nut 4. Accordingly, the lower surface $d_1$ of each thread D of the second nut 5 abuts slowly against the upper surface $b_1$ of each thread B of the second nut 5 while rotating about the bolt 2 thereby to generate a big frictional force.

Moreover, as mentioned above, the first and second nuts 4 and 5 in this assembly can bite against the bolt 2 while being pulled toward each other when the second nut 5 is rotated in its tightening direction. Therefore, an efficient locking effect can be obtained without pushing remarkably tightly the first nut 4 against the surface of the mechanical member 1b. That is, this double nut assembly can be adapted for fastening a mechanical member made of relatively soft material such as copper or aluminum. In addition, as a large torque is not necessary when the double nut assembly 3 is fastened, the respective threads of the bolt 2 and the assembly 3 are not subject to damage, whereby the assembly 3 can be used many times. Furthermore, in FIG. 8, as the upward tightening force $P_2$ corresponding to a repulsive force from the mechanical member is exerted on the contact surfaces $a_1$ and $b_2$ between the bolt 2 and the first nut 4 and the number of the contact surfaces $a_1$ and $b_2$ is relatively large, that is, the repulsive force from the mechanical surface is received on many threads, the assembly 3 can withstand a great repulsive force from the mechanical member 1b.

This double nut assembly can be used in many industrial fields such as those of automobiles, trains, airplanes, bridges, and building materials.

In the above example of this invention, the first nut 4 is adapted to be brought into contact with the mechanical member 1b. However, as shown in FIG. 10, the double nut assembly 3 may be inverted to screw on the bolt 2 in the state wherein the second nut 5 faces the surface of the mechanical member 1b. Also, in this case, the first nut 4 is rotated in the left-handed direction when the assembly 3 is fastened.

Furthermore, in the above example, the helically inclined surfaces K and L of the nuts 4 and 5 are in the form of a single continuous slope, respectively. However, as shown in FIG. 11, for example, the end face of the flange 4a of the first nut 4 may be divided into two helically inclined surfaces $K_1$ and $K_2$ with two steps 4e and 4f formed at the adjoining positions thereof, and the end face of the second nut 5 corresponding to the end face of the flange 4a thereof may be provided with two helically inclined surfaces (not shown) to cooperate with the surfaces $K_1$ and $K_2$. Also in this case, each half inclined surface extends in the same direction as that of a right-handed thread. Divided helically inclined surfaces of a number greater than two may be provided on the respective end faces of the first and second nuts.

FIG. 12 is a graph for showing the results of performance tests of the double nut assembly of this invention and two kinds of conventional double nut assemblies. The performance tests for comparing the double nut assembly of this invention with the conventional ones in endurance against vibrations and impact forces were carried out by a testing machine, as shown in FIGS. 13 and 14, invented by the applicant similar to an NS high speed impact and vibration testing machine manufactured by NIHON GIKEN KOGYO LTD.

That is, the testing machine has a vibration rod 10 which is vibrated vertically, and a support member 11 for supporting a test member 13. The support member 11 is provided with a slot 12 for accommodating the test member 13. The test member 13 comprises a cylindrical sleeve 14 through which a bolt 15 is inserted. The head 15a of the bolt 15 abuts against the center portion of a flange 14a provided at the end of the sleeve 14. The threaded end portion of the bolt 15 projects out beyond the other end of the sleeve 14 and is engaged with a conventional nut or the double nut assembly of this invention to be tested with a washer 16 interposed between the end of the sleeve 14 and the nut or nut assembly to be tested. In FIG. 14, the double nut assembly 3 is engaged therewith. On the outer peripheral surface of the sleeve 14 are two grooves 14b (only one is shown) in which two strain gauge pieces S are respectively provided. Lead lines 1 and 1 connected to these strain gauge pieces S extend outside through recesses 14c and 14c formed in the flange 14a, respectively.

In each test, the test member 13 was set in the slit 12 of the support member 11. Thereafter, the vibration rod 10 was vibrated at a high speed so that the test member 13 could be moved violently in the slit 12 in the vertical direction. During this operation, the strain gauge pieces S detected the state in which the nut being tested became loose.

In Fig. 12, the abscissa indicates the number of vibrations of the rod 10, that is, how many times the rod 10 vibrated from the start of the testing machine, while the ordinate indicates bolting force or axial force exerted on the bolt 15 when the sleeve 14 is fastened by the nut or nut assembly to be tested. Two curves $A_1$ and $A_2$ indicate two respective states in which a conventional nut 20, as shown in FIG. 15, became loose during the test, while two curves $B_1$ and $B_2$ indicate two respective states in which a conventional double nut assembly 25 as shown in FIGS. 16(a) and 16(b) became loose during the test.

The conventional nut 20 has two biting pieces 21 and 21 which bite against the outer peripheral surface of the bolt 15, respectively, when the nut 20 is engaged with the bolt 15. The conventional double nut assembly 25 comprises a first nut 26 and a second nut 27. The first nut 26 is provided with an annular projection 28 which is inserted into the expanded annular recess 29 of the second nut 27 when the assembly 25 is engaged with the bolt 15.

When the testing machine was operated at 1,780 vibrations per minute after the nut 20 or nut assembly 25 had been fastened so as to generate a bolting force of 500 kp, the nut 21 became completely loose before the number of vibrations of the machine reached 300 (curve $A_1$) while the nut assembly 25 became completely loose when the number of vibrations of the machine reached about 380 (curve $B_1$). In contrast, the double nut assembly 3 of this invention underwent almost no loosening even when the number of vibrations was increased as shown by curve $C_1$.

When the bolting force was increased to 2000 kp, the nut 21 became completely loose when the number of vibrations reached about 1,550, while the nut assembly 25 became completely loose when the number of vibrations reached about 1,870. This test indicates that conventional nuts become loose even if they are fastened so as to remarkably increase the bolting force, while the double nut assembly 3 of this invention undergoes almost no loosening even if it is fastened so as to generate a small bolting force, that is, it is fastened with a small torque.

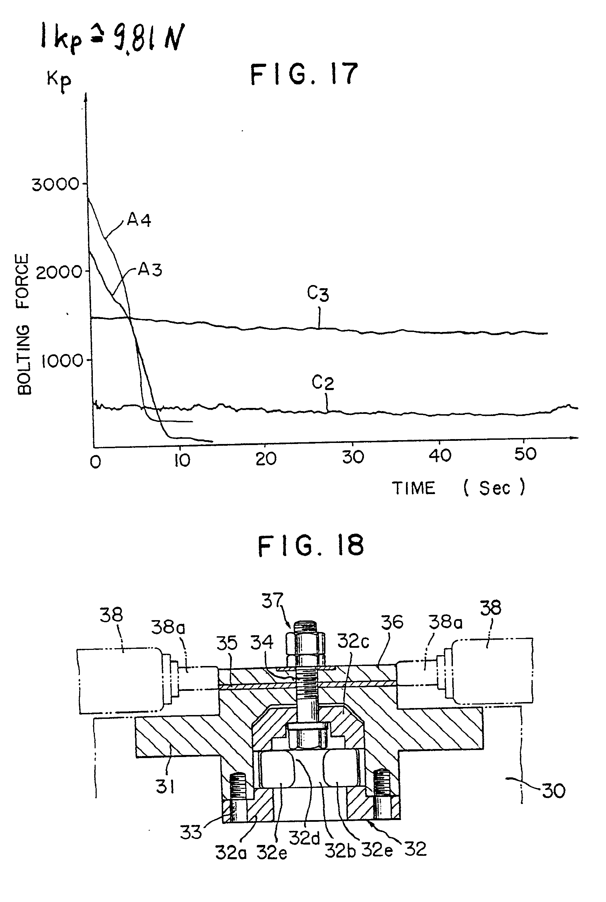

FIG. 17 is a graph of the result of performance tests carried out by the use of a transverse shock and vibration machine as shown in FIG. 18. This machine has a base 30 in which a holding frame 31 is held. Into the holding frame 31 is inserted a load detecting member 32 which comprises a flange 32a, an intermediate cylindrical portion 32b and a bolt holding portion 32c. The flange 32a is fixed by a plurality of bolts 33 to the lower face of the load detecting member 32. The intermediate cylindrical portion 32b is provided with a plurality of windows 32e to form a connecting portion 32d between the two adjoining windows 32. A strain-gauge (not shown) is applied to each connecting portion 32d. A bolt 34 is passed through the holding frame 31, a bearing plate 35 and an impact plate 36 to project out through the impact plate 36, and the projecting portion of the bolt 34 is engaged by a nut assembly 37 to be tested. Two air hammers 38, 38 are provided on opposite sides of the impact plate 36 with the vibration rod 38a of each hammer 38 abutting against the side face of the impact plate 36. When the air hammers 38 are operated to impart vibration and impact to the impact plate 36, the nut assembly 37 is subjected to action tending to loosen it. If the nut assembly 37 becomes loose, the strain exerted on the load detecting number 32 gradually decreases. This state is detected by the strain-gauge attached to the connecting portion 32d of the body 32.

In FIG. 17, curve $A_3$ indicates the state wherein the above nut 21 shown in FIG. 20 became loose after the nut 21 was fastened so as to generate a bolting force of 2,300 kp on the bolt 34. Furthermore, curve $A_4$ indicates the state wherein the same nut 20 became loose after the nut 20 was fastened to generate a bolting force of 2,800 kp.

In these tests, the air hammers 38 were operated at a vbration of a frequency of 600 per minute.

In both cases, the nut 20 became completely loose before ten seconds had passed from the start. In contrast, the double nut assembly 3 of this invention exhibited substantially no loosening after more than fifty seconds had passed from the start, as indicated by two curves $C_2$ and $C_3$, even when the assembly 3 was fastened at respective two different bolting forces of 500 kp and 1,500 kp.
(1 kp $\triangleq$ 9,81 N)

**Claims**

1. A double locknut assembly comprising a first nut (4) having a flange (4a) and a cylindrical portion (4b) projecting coaxially from the flange (4a) and a second nut (5) in the form of a cup for receiving the cylindrical portion (4b) therein, the first nut (4) having: a tapped hole (4c) tapped with a plurality of first female screw threads (A) to engage with a bolt (2); and a plurality of second male screw threads (C) formed on the outer peripheral surface of the cylindrical portion (4b), the second male screw threads (C) being of a hand opposite to that of the first female screw threads (A), the second nut (5) having: a base portion (5a) provided with a tapped hole (5b) tapped with a plurality of third female threads (D) to engage with the bolt (2); and a cylindrical side wall portion (5d) projecting from the base portion (5a), the inner wall surface of the wall portion (5d) being formed with a plurality of fourth female screw threads (E) to engage with the second male screw threads (C), the double nut assembly (3) being engagable with the bolt (2) with the first and second nuts (4, 5) combined with each other until one face of the assembly abuts against the surface of a mechanical member or members (1a, 1b) to be fastened, either one of the first and second nuts (4, 5) which does not contact the surface of the mechanical member or members (1a, 1b) being thereafter rotated in a direction such as to fasten the assembly (3) against the mechanical member or members (1a, 1b), characterized in that an end face of a wall portion (5d) of the second nut (5) and an end face of the flange (4a) of the first nut (4), opposite to the end face of the side wall portion (5d) are formed with respective helically inclined surfaces (L, K) to mutually confront and correspondingly mate with each other, which surfaces are respectively inclined along the inclined direction of the third female threads (D), and the first female screw threads (A).

2. A double locknut assembly according to claim 1, characterised in that, for use with a bolt (2) having a plurality of right-handed screw threads (B), the first and third female screw threads (A, D) are right-handed screw threads, while the second male and fourth female screw threads (C, E) are left-handed screw threads.

3. A double locknut assembly according to claim 1 or 2, characterised in that the assembly (3) is so engageable with the bolt (2) that the flange (4a) of the first nut (4) is brought into abutment against the surface of the mechanical member or members (1a, 1b), the second nut (5) being rotated when the two nuts (4, 5) are fastened to each other to increase the frictional force between the two nuts (4, 5).

4. A double locknut assembly according to claim 1 or 2, characterised in that the assembly (3) is so engagable with the bolt (2) that the base portion (5a) of the second nut (5) is brought into abutment against the surface of the mechanical member or members (1a, 1b), the first nut (4) being rotated when the two nuts (4, 5) are fastened to each other to increase the frictional force between the two nuts (4, 5).

5. A double locknut assembly according to any one of the preceding claims, characterised in that the pitch of the second male and fourth female screw threads (E, C) is narrower than that of the first and third female screw threads (A, D).

6. A double lock nut assembly according to any one of the preceding claims, characterised in that each of the helically inclined surfaces (K, L) is divided into a plurality of contiguously adjoining slopes ($K_1$, $K_2$) with a plurality of steps (4e, 4f) formed between the two adjoining slopes (4e, 4f).

7. The combination of a bolt and a double locknut assembly according to any one of the preceding claims.

8. The combination of claim 7 when used to secure first and second members together.

**Patentansprüche**

1. Doppelverriegelungsmutter-Anordnung mit einer ersten Mutter (4), die einen Flansch (4a) und einen zylindrischen Abschnitt (4b) aufweist, der koaxial vom Flansch (4a) ausgeht, und mit einer zweiten Mutter (5) in Form eines Bechers zum Aufnehmen des zylindrischen Abschnittes (4b) darin, wobei die erste Mutter (4) aufweist: ein Gewindeloch (4c), welches mit einer Vielzahl von ersten Innengewindegängen (A) versehen ist, die mit einem Bolzen (2) im Eingriff stehen; und eine Vielzahl von zweiten Außengewindegängen (C), die an der Außenumfangsfläche des zylindrischen Abschnittes (4b) ausgebildet sind, wobei die zweiten Außengewindegänge (C), eine Gängigkeit haben, die der der ersten Innengewindegänge (A) entgegengesetzt ist, wobei die zweite Mutter (5) aufweist: einen Grundabschnitt (5A), der mit einem Gewindeloch (5B) versehen ist, das eine Vielzahl von dritten Innengewindegängen (C) aufweist, die mit dem Bolzen (2) in Eingriff stehen; und einen zylindrischen Seitenwandabschnitt (5b), der vom Grundabschnitt (5a) vorsteht, wobei die Innenwandfläche des Wandabschnitts (5d) mit einer Vielzahl von vierten Innengewinden (E) versehen ist, die mit den zweiten Außengewindegängen (C) im Eingriff stehen, wobei die Doppelmutteranordnung (3) mit dem Bolzen (2) in Eingriff bringbar ist und die erste und zweite Mutter (4, 5) miteinander verbunden sind, bis eine Fläche der Anordnung gegen die Fläche eines festzulegenden mechanischen Teils oder Teilen (1a, 1b) stößt, und wobei entwender die erste oder zweite Mutter (4, 5), die nicht mit der Fläche des mechanischen Teils oder der Teile (1a, 1b) Berührung stehen, danach in eine Richtung gedreht werden, so daß die Anordnung (3) gegen das mechanische Teil oder die Teile (1a, 1b) festgelegt wird, dadurch gekennzeichnet, daß eine Endfläche des Seitenwandabschnittes (5d) der zweiten Mutter (5) und eine Endfläche des Flansches (4a) der ersten Mutter (4), entgegengesetzt der Endfläche des Seitenwandabschnittes (5d), jeweils mit schraubenförmig geneigt verlaufenden Flächen (L, K) versehen sind, die aufeinanderzu gerichtet sind und entsprechend miteinander zu wirken, und daß die Flächen jeweils entlang der geneigten Richtung der dritten Innenwindegänge (D) und der ersten Innengewindegänge (A) geneigt sind.

2. Doppelvierriegelungsmutter-Anordnung nach Anspruch 1, dadurch gekennzeichnet, daß für die Verwendung mit einem Bolzen (2) mit einer Vielzahl von rechtsgängigen Gewindegängen (B) die ersten und dritten Innengewindergänge (A, D) rechtsgänge Gewindegänge sind, während die zweiten Außen- und vierten Innengewindegänge (C, E) linksgängige Gewindegänge sind.

3. Doppelvierriegelungsmutter-Anordnung nach Anspruch 1 oder 2, dadurch gekennzeichnet, daß die Anordnung (3) so mit dem Bolzen (2) in Eingriff bringbar ist, daß der Flansch (4a) der ersten Mutter (4) in Anlage an die Fläche des mechanischen Teils oder der Teile (1a, 1b) bringbar ist, und daß die zweite Mutter (5) gedreht wird, wenn die beiden Muttern (4, 5) aneinander befestigt werden, um die Reibungskraft zwischen den beiden Muttern (4, 5) zu erhöhen.

4. Doppelverriegelungsmutter-Anordnung nach Anspruch 1 oder 2, dadurch gekennzeichet, daß die Anordnung (3) so mit dem Bolzen (2) in Eingriff bringbar ist, daß der Grundabschnitt (5a) der zweiten Mutter (5) in Anlage an die Fläche des mechanischen Teils oder der Teile (1a, 1b) gebracht wird, und daß die erste Mutter (4) gedreht wird, wenn die beiden Muttern (4, 5) aneinander befestigt werden, um die Reibungskraft zwischen den beiden Muttern (4, 5) zu erhöhen.

5. Doppelverriegelungsmutter-Anordnung nach einem der vorhergehenden Ansprüche, dadurch gekennzeichnet, daß die Teilung der zweiten Außen- und vierten Innengewindegänge (E, C) kleiner ist als die der ersten und dritten Innengewindegänge (A, D).

6. Doppelvierriegelungsmutter-Anordnung nach einem der vorhergehenden Ansprüche, dadurch gekennzeichet, daß jede der schraubenförmig verlaufenden Flächen (K, L) in einer Vielzahl von aneinander angrenzenden Neigungsflächen (K1, K2) aufgeteilt sind, wobei eine Vielzahl von Stufen (4e, 4f) zwischen den benachbarten Neigungsflächen (4e, 4f) ausgebildet ist.

7. Kombination aus einem Bolzen und einer Doppelverriegelungsmutter-Anordnung entsprechend einem der vorhergehenden Ansprüche.

8. Kombination nach Anspruch 7 bei Verwendung hinsichtlich der Befestigung eines ersten und zweiten Teils miteinander.

**Revendications**

1. Un ensemble à double écrou de blocage comprenant un premier écrou (4) pourvu d'une collerette (4a) et d'une partie cylindrique (4b) faisant saillie coaxialement à la collerette (4a), et un second écrou (5) se présentant sous la forme d'une cuvette destinée à recevoir la partie cylindrique (4b), le premier écrou comportant: un trou taraudé (4c) pourvu d'une pluralité de premiers filets femelles (A) venant se visser sur un boulon (2); et une pluralité de seconds filets mâles (C) formés sur la surface périphérique extérieure de la partie cylindrique (4b), les seconds filets mâles (C) étant d'un pas opposé à celui des premiers filets femelles (A), le second écrou (5) comportant: une partie de base (5a) pourvue d'un trou taraudé (5b) comportant une pluralité de troisièmes filets (D) femelles venant se visser sur le boulon (2); et une partie de paroi latérale cylindrique (5d) faisant saillie de la partie de base (5a), la surface de paroi intérieure (5d) de la partie de paroi étant pourvue d'une pluralité de quatrièmes filets femelles (E) venant se visser sur les seconds filets mâles (C), l'ensemble à double écrou (3) pouvant être vissé sur le boulon (2), avec assemblage des premier et second écrous (4, 5) l'un avec l'autre, jusqu'à ce qu'une face de l'ensemble vienne buter contre la surface d'un ou plusieurs éléments mécaniques (1a, 1b) à fixer, l'un ou l'autre desdits premier et second écrous (4, 5) qui n'entre pas en contact avec la surface du ou des éléments mécaniques (1a, 1b) étant ensuite tourné dans une direction permettant la fixation de l'ensemble (3) contre le ou les éléments mécaniques (1a, 1b), caractérisé en ce qu'une face extrême d'une partie de paroi latérale (5d) du second écrou (5) et une face extrême de la collerette (4a) due premier écrou (4), opposée à la face extrême de la partie de paroi latérale (5b), sont profilées avec des surfaces d'inclinaison hélicoïdale respectives (L, K) qui sont mutuellement placées en regard l'une de l'autre et en correspondance l'une avec l'autre, lesdites surfaces sont respectivement inclinées le long de la direction d'inclinaision des troisièmes filets femelles (D) et des premiers filets femelles (A).

2. Un ensemble à double écrou de blocage selon la revendication 1, caractérisé en ce que, pour une utilisation avec un boulon (2) comportant une pluralité de filets à pas à droite (B), les premiers et troisièmes filets femelles (A, D) sont des filets à pas à droite, tandis que les seconds et quatrièmes filets femelles (C, E) sont des filets à pas à gauche.

3. Un ensemble à double écrou de blocage selon la revendication 1 ou 2, caractérisé en ce que l'ensemble (3) peut être vissé sur le boulon (2) de telle sorte que la collerette (4a) du premier écrou (4) soit amenée en butée contre la surface du ou des éléments mécaniques (1a, 1b), le second écrou (5) étant tourné lorsque les deux écrous (4 et 5) sont assemblés l'un avec l'autre afin d'augmenter la force de friction entre les deux écrous (4, 5).

4. Un ensemble à double écrou de blocage selon la revendication 1 ou 2, caractérisé en ce que l'ensemble (3) peut être vissé sur le boulon (2) de telle sorte que la partie de base (5a) du second écrou (5) soit amenée en butée contre la surface du ou des éléments mécaniques (1a, 1b) le premier écrou (4) étant entraîné en rotation quand les deux écrous (4, 5) sont assemblés l'un avec l'autre afin d'augmenter la force de friction entre les deux écrous (4, 5).

5. Un ensemble à double écrou de blocage selon l'une quelconque des revendications précédentes, caractérisé en ce que le pas des seconds et quatrièmes filets femelles (E, C) est plus petit que celui des premiers et troisièmes filets femelles (A, D).

6. Un ensemble à double écrou de blocage selon l'une quelconque des revendications précédentes, caractérisé en ce que chacune des surfaces d'inclinaison hélicoïdale (K, L) est divisée en une pluralité de pentes adjacentes et contiguës ($K_1$, $K_2$) avec formation d'une pluralité de gradins (4e, 4f) entre les deux pentes adjacentes (4e, 4f).

7. La combinaison d'un boulon et d'un ensemble à double écrou de blocage selon l'une quelconque des revendications précédentes.

8. La combinaison de la revendication 7 lorsqu'elle est utilisée pour assembler un premier et un second élément l'un avec l'autre.

FIG. 1

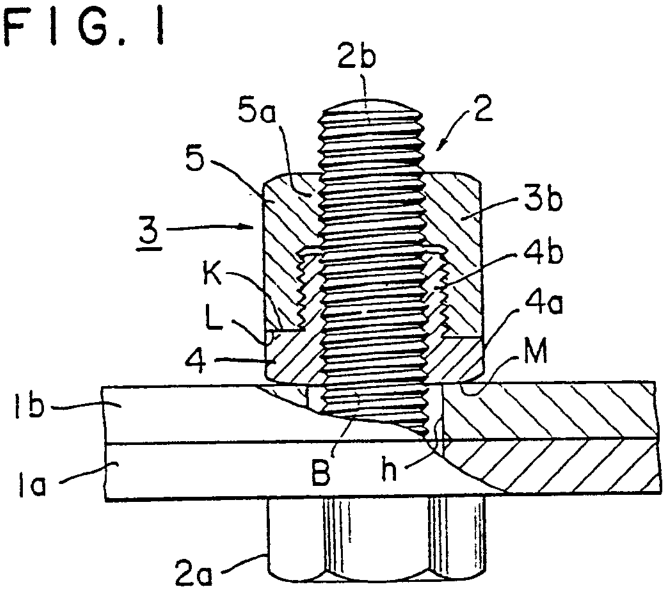


FIG. 2

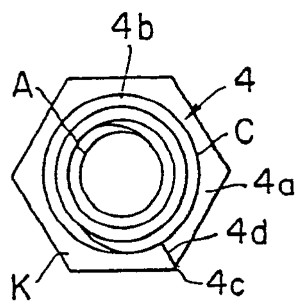


FIG. 3

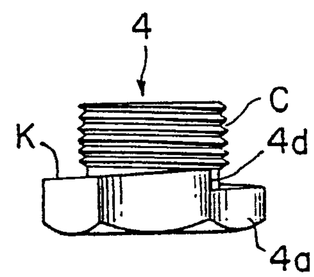


FIG. 4

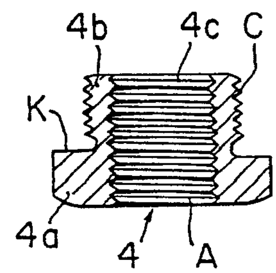


FIG. 5

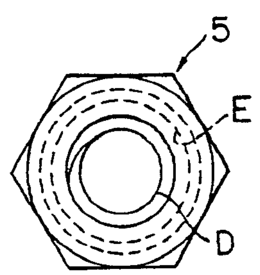


FIG. 6

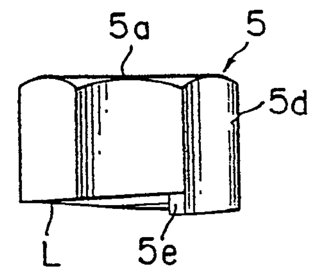


FIG. 7

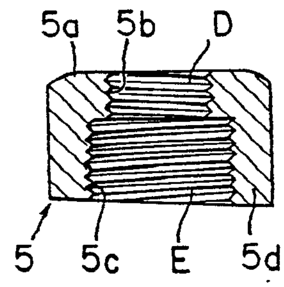

FIG. 8

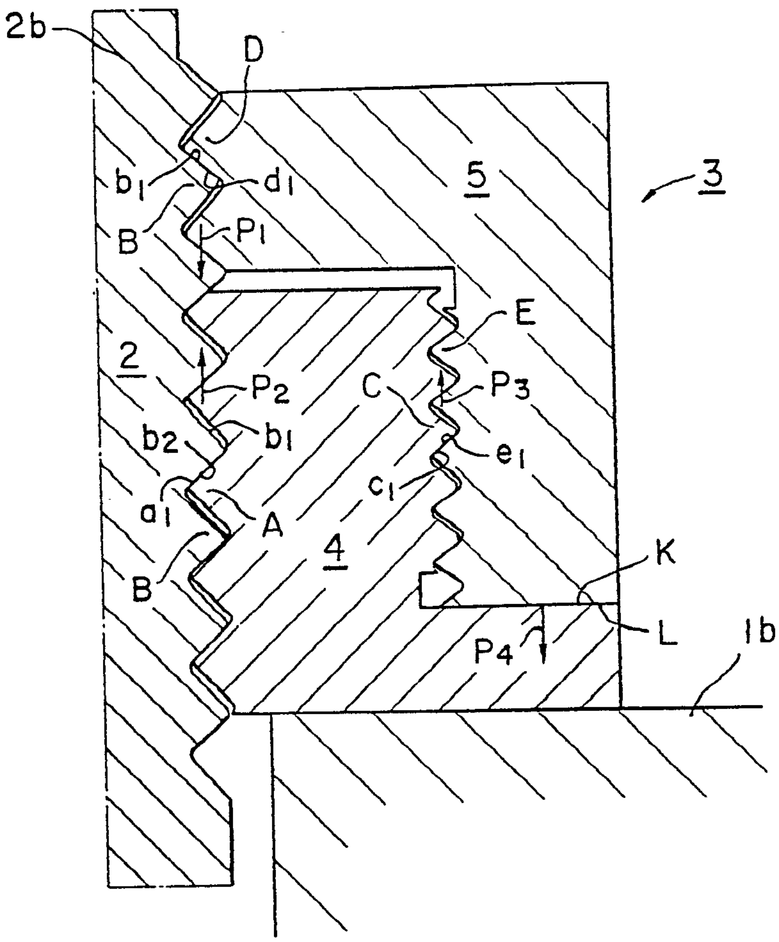


FIG. 9 (A)

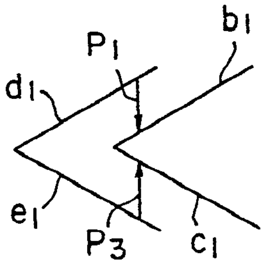


FIG. 9 (B)

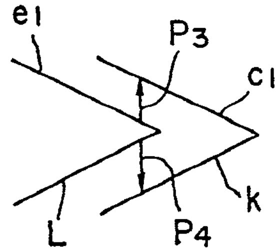

FIG. 10

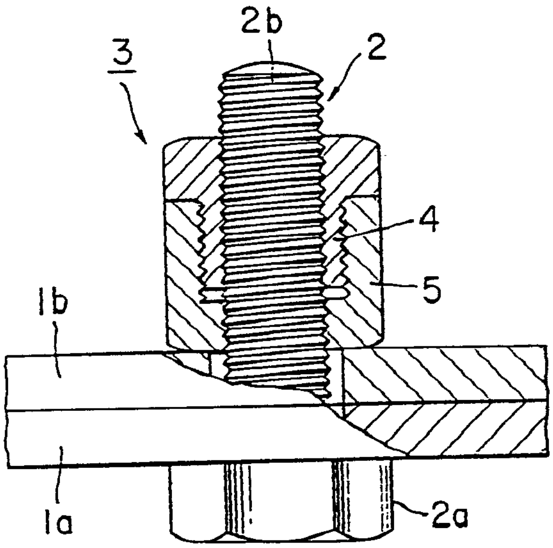


FIG. 11

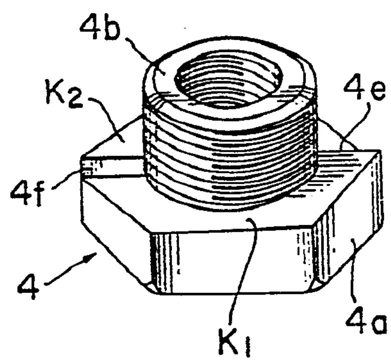


(1Kp ≙ 9.81N)

FIG. 12

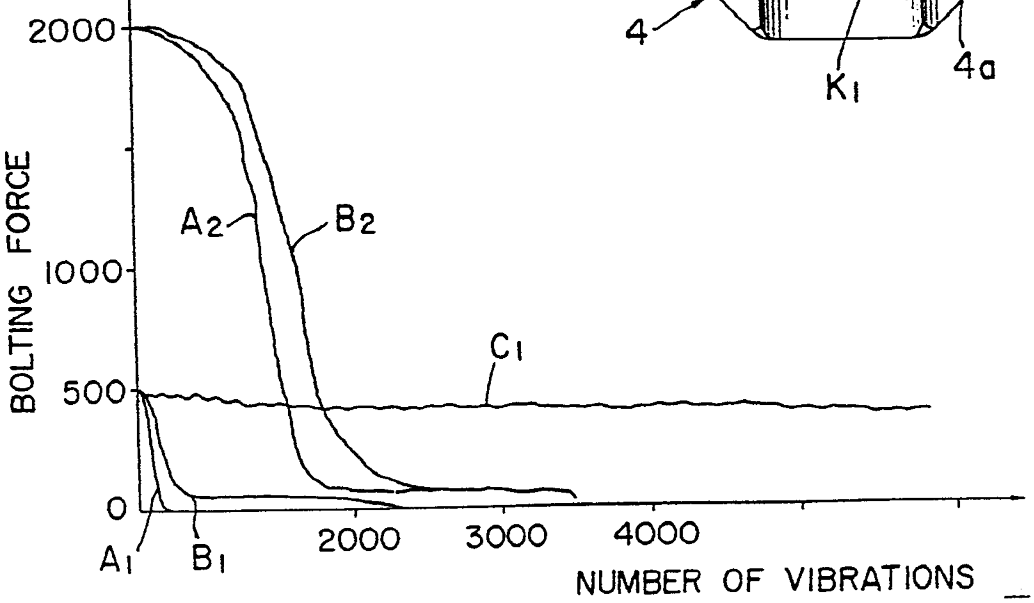

FIG. 13

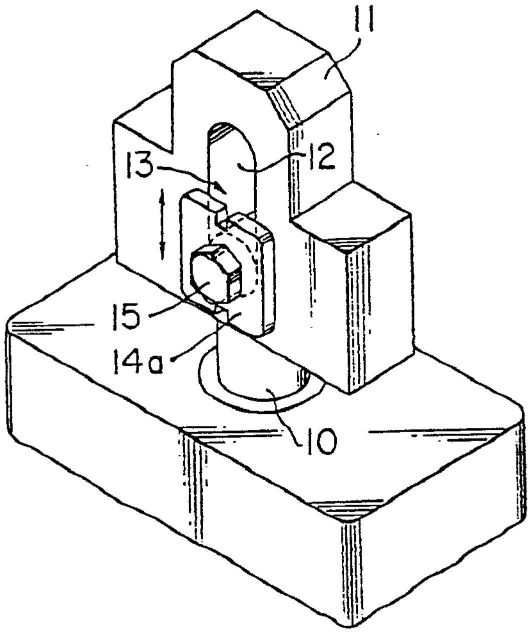


FIG. 14

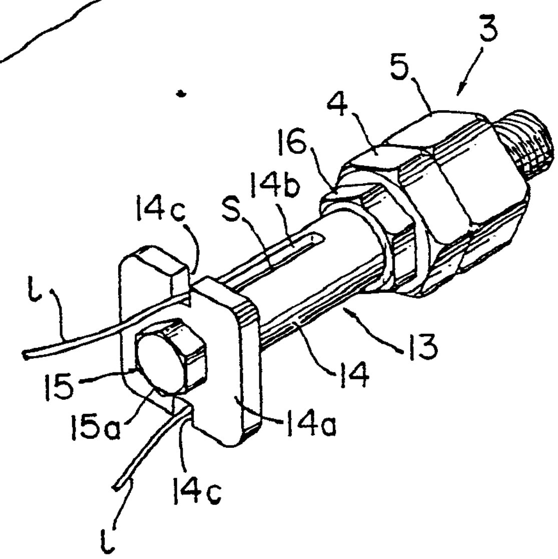


FIG. 15

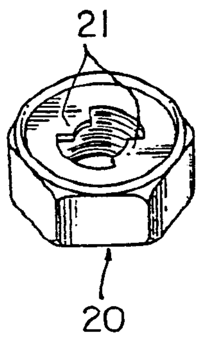


FIG. 16 (B)

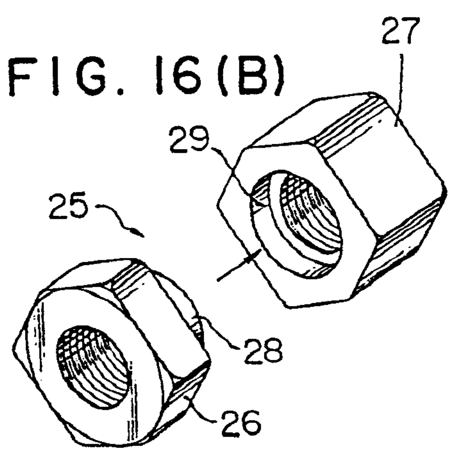


FIG. 16 (A)

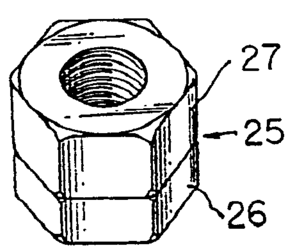

1 kp ≙ 9,81 N

FIG. 17

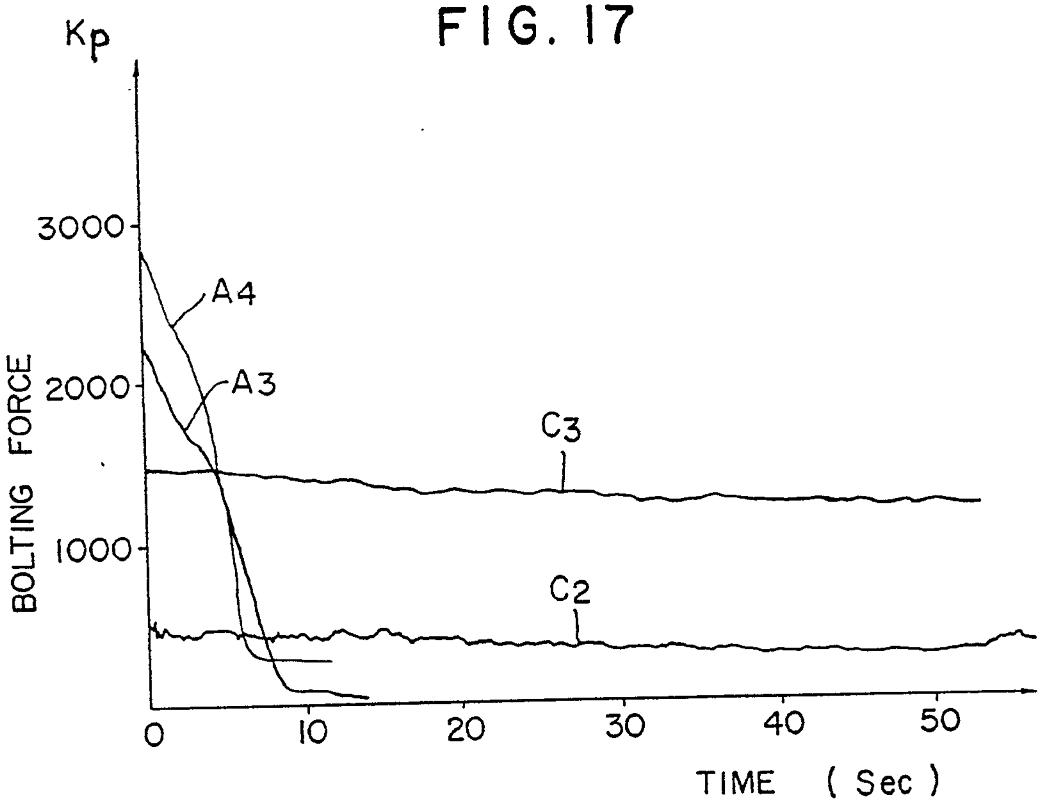


FIG. 18